(19) Europäisches Patentamt / European Patent Office / Office européen des brevets

(11) **EP 4 369 787 A1**

(12) **EUROPEAN PATENT APPLICATION**
published in accordance with Art. 153(4) EPC

(43) Date of publication:
**15.05.2024 Bulletin 2024/20**

(21) Application number: **22852366.8**

(22) Date of filing: **05.08.2022**

(51) International Patent Classification (IPC):
**H04W 36/00** (2009.01)    **H04W 4/20** (2018.01)
**H04W 8/08** (2009.01)    **H04W 24/06** (2009.01)
**H04W 28/08** (2023.01)

(52) Cooperative Patent Classification (CPC):
**H04W 4/20; H04W 8/08; H04W 24/06; H04W 36/00**

(86) International application number:
**PCT/CN2022/110695**

(87) International publication number:
**WO 2023/011655 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 CN 202110900384**

(71) Applicant: **Huawei Technologies Co., Ltd.
Shenzhen, Guangdong 518129 (CN)**

(72) Inventors:
• **GENG, Tingting
Shenzhen, Guangdong 518129 (CN)**
• **ZENG, Yu
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **COMMUNICATION METHOD AND APPARATUS**

(57) A communication method and an apparatus are provided. The method includes: A second network device sends a first message to a first network device corresponding to a first target cell. The first target cell is a predicted serving cell that can be accessed by a terminal device. The first message indicates a first inference result. The first inference result includes at least one of the following predicted information: future movement information of the terminal device, future service information of the terminal device, or future movement track information of the terminal device. The first network device can perform AI inference, another operation, or the like based on the received first inference result, to improve utilization of the first inference result.

FIG. 3

**Description**

**CROSS-REFERENCE TO RELATED APPLICATIONS**

This application claims priority to Chinese Patent Application No. 202110900384.2, filed with the China National Intellectual Property Administration on August 6, 2021 and entitled "COMMUNICATION METHOD AND APPARATUS", which is incorporated herein by reference in its entirety.

**TECHNICAL FIELD**

Embodiments of this application relate to the field of communication technologies, and in particular, to a communication method and an apparatus.

**BACKGROUND**

In a communication system, a terminal may perform cell access. The cell access includes handover of a corresponding cell of a master node and mobility of a secondary node. The mobility of the secondary node includes adding, deleting, or changing of a cell corresponding to the secondary node. For example, if signal quality of a current serving cell of the terminal is poor, and signal quality of a neighboring cell is good, the terminal can access the neighboring cell. The cell access may mean that the terminal completes, under control of a network device, migration of a wireless link connection from a source cell to a target cell, and is a basic technical means for maintaining a seamless mobile communication service. How the terminal performs cell handover is a problem worth studying.

**SUMMARY**

Embodiments of this application provide a communication method and an apparatus, to implement cell handover of a terminal device.

According to a first aspect, a communication method is provided. The method is executed by a second network device, or may be executed by a component (such as a processor, a chip, a circuit, or the like) configured in the second network device, a software module, or the like. The method includes:

sending a first message to a first network device corresponding to a first target cell, where the first target cell is a predicted serving cell that can be accessed by a terminal device, the first message indicates a first inference result, and the first inference result includes at least one of the following predicted information: future movement information of the terminal device, future service information of the terminal device, or future movement track information of the terminal device.

According to the foregoing design, the second network device sends, to the first network device, an AI inference result, that is, the first inference result used to determine the first target cell. The first network device may use the AI inference result or perform another operation, to improve utilization of the AI inference result.

In a possible design, the first target cell is determined based on the first inference result.

In a possible design, the future movement information of the terminal device includes at least one of the following predicted information: information about a future cell of the terminal device, camping time information of the terminal device in the future cell, a manner of accessing the future cell by the terminal device, information about whether the terminal device exits a connected state in the future cell, or prediction accuracy of the future movement information of the terminal device.

In a possible design, the future service information of the terminal device includes at least one of the following predicted information: a future service type of the terminal device, a quality of service QoS requirement of a future service, a traffic volume of the future service, or time information of the future service.

In a possible design, the method further includes: receiving feedback information from the first network device, where the feedback information includes indication information of at least one of the following: actual camping time information of the terminal device in the first target cell, information about whether the terminal device actually exits the connected state in the first target cell, a second inference result, or a second target cell.

In a possible design, the feedback information is used to optimize or update a parameter of a model for determining the first inference result.

In this design, after the terminal device actually accesses the first network device, the first network device may send the feedback information to the second network device based on an actual operation parameter of the terminal device. The first network device may optimize or update an AI model-related parameter, for example, an AI model or an input parameter of the AI model based on the feedback information, to improve inference accuracy based on the AI model.

In a possible design, the first inference result includes a mobility-related inference result of a primary cell of the terminal device, and/or a mobility-related inference result of a secondary node of the terminal device.

In a possible design, when the first inference result includes the mobility-related inference result of the primary cell of the terminal device, the first message includes indication information indicating whether at least one of a source secondary node, a source secondary cell group, a source primary secondary cell, or a source secondary cell of the terminal device needs to be changed.

According to a second aspect, a communication method is provided. The method is executed by a first network device, or may be executed by a component (such as a processor, a chip, a circuit, or the like) configured in the first network device, a software module, or the like. The method includes:

receiving a first message from a second network device, where the first message indicates a first inference result, and the first inference result includes at least one of the following predicted information: future movement information of a terminal device, future service information of the terminal device, or future movement track information of the terminal device.

According to the foregoing design, the first network device may perform a corresponding operation based on the first inference result, to improve utilization of the first inference result. In addition, that the first network device performs AI inference based on the first inference result is used as an example. The first network device may directly perform the AI inference based on the first inference result, rather than performing inference from the beginning. This saves computing resources and storage resources of the first network device.

In a possible design, the first message is used to request the first network device to allocate a resource corresponding to a first target cell to the terminal device, and the first target cell is a predicted serving cell that can be accessed by the terminal device.

In a possible design, the method further includes: allocating the resource of the first target cell to the terminal device in response to the first message; and sending, to the second network device, indication information of the resource that is of the first target cell and that is allocated to the terminal device.

In a possible design, the future movement information of the terminal device includes at least one of the following predicted information:

information about a future cell of the terminal device, camping time information of the terminal device in the future cell, a manner of accessing the future cell by the terminal device, information about whether the terminal device exits a connected state in the future cell, or prediction accuracy of the future movement information of the terminal device.

In a possible design, the future service information of the terminal device includes at least one of the following predicted information:

a future service type of the terminal device, a quality of service QoS requirement of a future service, a traffic volume of the future service, or time information of the future service.

In a possible design, the method further includes: sending feedback information to the second network device, where the feedback information includes indication information of at least one of the following: actual camping time information of the terminal device in the first target cell, information about whether the terminal device actually exits a connected state in the first target cell, a second inference result, or a second target cell.

In a possible design, the feedback information is used to optimize or update a parameter of a model for determining the first inference result.

In a possible design, the first inference result includes a mobility-related inference result of a primary cell of the terminal device, and/or a mobility-related inference result of a secondary node of the terminal device.

In a possible design, when the first inference result includes the mobility-related inference result of the primary cell of the terminal device, the first message includes indication information indicating whether at least one of a source secondary node, a source secondary cell group, a source primary secondary cell, or a source secondary cell of the terminal device needs to be changed.

According to a third aspect, an apparatus is provided. For beneficial effects, refer to descriptions of the first aspect. The apparatus may be a network device, or an apparatus configured in the network device, or an apparatus that can be used together with the network device. In a design, the apparatus may include units that are in one-to-one correspondence with the methods/operations/steps/actions described in the first aspect. The units may be implemented by using a hardware circuit, software, or a combination of a hardware circuit and software. For example, the apparatus may include a processing unit and a communication unit, and the processing unit and the communication unit may perform corresponding functions in any design example of the first aspect. Specifically, the processing unit is configured to generate a first message. The communication unit is configured to send the first message to a first network device corresponding to a first target cell. The first target cell is a predicted serving cell that can be accessed by a terminal device. The first message indicates a first inference result, and the first inference result includes at least one of the following predicted information: future movement information of the terminal device, future service information of the terminal device, or future movement track information of the terminal device.

For a specific execution process of the processing unit and the communication unit, refer to descriptions in the first aspect.

According to a fourth aspect, an apparatus is provided. For beneficial effects, refer to descriptions of the first aspect. The apparatus includes a memory, configured to implement the method described in the first aspect. The apparatus may further include a memory, configured to store instructions and/or data. The memory is coupled to the processor. When executing the program instructions stored in the memory, the processor can implement the method described in the first aspect. The apparatus may further include a communication interface, and the communication interface is used by the apparatus to communicate with another device. For example, the communication interface may be a transceiver, a circuit, a bus, a module, a pin, or a communication interface of another type. In a possible design, the apparatus includes:

a memory, configured to store program instructions;
a processor, configured to generate a first message; and
a communication interface, configured to send a first message to a first network device corresponding to a first target cell, where the first target cell is a predicted serving cell that can be accessed by a terminal device, the first message indicates a first inference result, and the first inference result includes at least one of the following predicted information: future movement information of the terminal device, future service information of the terminal device, or future movement track information of the terminal device.

For a specific execution process of the processor and the communication interface, refer to descriptions in the first aspect.

According to a fifth aspect, an apparatus is provided. For beneficial effects, refer to descriptions of the second aspect. The apparatus may be a network device, or an apparatus configured in the network device, or an apparatus that can be used together with the network device. In a design, the apparatus may include units that are in one-to-one correspondence with the methods/operations/steps/actions described in the second aspect. The units may be implemented by using a hardware circuit, software, or a combination of a hardware circuit and software. For example, the apparatus may include a processing unit and a communication unit, and the processing unit and the communication unit may perform corresponding functions in any design example of the second aspect. Specifically, the communication unit is configured to receive a first message from a second network device. The first message indicates a first inference result, and the first inference result includes at least one of the following predicted information: future movement information of a terminal device, future service information of the terminal device, or future movement track information of the terminal device. The processing unit is configured to process the first message.

For a specific execution process of the processing unit and the communication unit, refer to descriptions in the second aspect.

According to a sixth aspect, an apparatus is provided. For beneficial effects, refer to descriptions of the second aspect. The apparatus includes a memory, configured to implement the method described in the second aspect. The apparatus may further include a memory, configured to store instructions and/or data. The memory is coupled to the processor. When executing the program instructions stored in the memory, the processor can implement the method described in the second aspect. The apparatus may further include a communication interface, and the communication interface is used by the apparatus to communicate with another device. For example, the communication interface may be a transceiver, a circuit, a bus, a module, a pin, or a communication interface of another type. In a possible design, the apparatus includes:

a memory, configured to store program instructions;
a communication interface, configured to receive a first message from a second network device, where the first message indicates a first inference result, and the first inference result includes at least one of the following predicted information: future movement information of a terminal device, future service information of the terminal device, or future movement track information of the terminal device; and
a processor, configured to process the first message.

For a specific execution process of the processor and the communication interface, refer to descriptions in the second aspect.

According to a seventh aspect, an embodiment of this application further provides a computer-readable storage medium, including instructions. When the instructions are run on a computer, the computer is enabled to perform the method according to either the first aspect or the second aspect.

According to an eighth aspect, an embodiment of this application further provides a chip system. The chip system includes a processor, and may further include a memory, configured to implement the method according to either the first aspect or the second aspect. The chip system may include a chip, or may include the chip and another discrete component.

According to a ninth aspect, an embodiment of this application further provides a computer program product, including instructions. When the instructions are run on a computer, the computer is enabled to perform the method according to either the first aspect or the second aspect.

According to a tenth aspect, an embodiment of this application further provides a system. The system includes the apparatus in the third aspect or the fourth aspect and the apparatus in the fifth aspect or the sixth aspect.

## BRIEF DESCRIPTION OF DRAWINGS

FIG. 1 is a schematic diagram of a communication architecture according to an embodiment of this application;
FIG. 2a to FIG. 2d are schematic diagrams of an AI model according to an embodiment of this application;
FIG. 3 to FIG. 6 are flowcharts of communication methods according to an embodiment of this application;
FIG. 7 and FIG. 8 are schematic diagrams of apparatuses according to an embodiment of this application;
FIG. 9a is a schematic diagram of a structure of a neuron; and
FIG. 9b is a schematic diagram of a layer relationship of a neural network.

## DESCRIPTION OF EMBODIMENTS

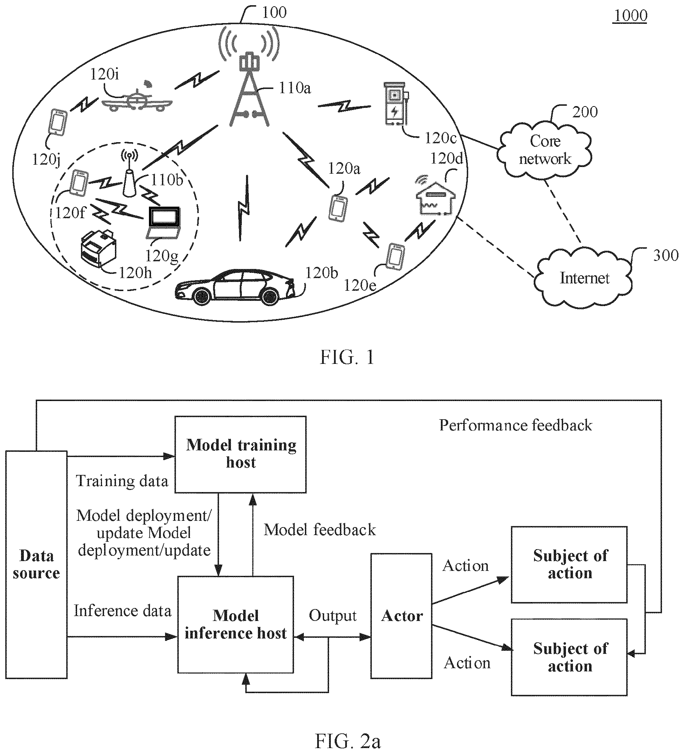

FIG. 1 is a schematic diagram of an architecture of a communication system 1000 to which an embodiment of this application is applied. As shown in FIG. 1, the communication system includes a wireless access network 100 and a core network 200. Optionally, the communication system 1000 may further include an Internet 300. The wireless access network 100 may include at least one wireless access network device (for example, 110a and 110b in FIG. 1), and may further include at least one terminal (for example, 120a to 120j in FIG. 1). The terminal is connected to the wireless access network device in a wireless manner, and the wireless access network device is connected to a core network device in a wireless or wired manner. The core network device and the wireless access network device may be different physical devices independent of each other, functions of the core network device and logical functions of the wireless access network device may be integrated into a same physical device, or a part of functions of the core network device and a part of functions of the wireless access network device may be integrated into one physical device. A wired or wireless manner may be used for a connection between the terminals and between the wireless access network devices. FIG. 1 is only a schematic diagram. The communication system may further include other network devices, for example, may further include a wireless relay device and a wireless backhaul device. This is not shown in FIG. 1.

The wireless access network device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, an access node in a wireless fidelity (wireless fidelity, Wi-Fi) system, or the like. The wireless access network device may alternatively be a module or a unit that completes some functions of a base station, for example, may be a central unit (central unit, CU), or may be a distributed unit (distributed unit, DU). The CU completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete functions of some physical (physical, PHY) layers or all physical layers. For specific descriptions of the foregoing protocol layers, refer to related technical specifications of a 3rd generation partnership project (3rd generation partnership project, 3GPP). The wireless access network device may alternatively be a macro base station (for example, 110a in FIG. 1), or may be a micro base station or an indoor station (for example, 110b in FIG. 1), or may be a relay node, a donor node, or the like. A specific technology and a specific device form used by the wireless access network device are not limited in embodiments of this application. For ease of description, the following uses an example in which the base station is used as the wireless access network device for description.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal are not limited in embodiments of this application. For ease of description, the following uses an example in which the UE is used as a terminal for description.

The base station and the terminal may be fixed or movable. The base station and the terminal may be deployed on land, including an indoor or outdoor scenario, and a handheld or a vehicle-mounted scenario; or may be deployed on water; or may be deployed on aircraft, a balloon, or a man-made satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the wireless access network 100 through 120i, the terminal 120i is a base station. However, for a base station 110a, 120i is a terminal. In other words, communication between 110a and 120i is performed according to a wireless air interface protocol. Certainly, communication may alternatively be performed between 110a and 120i according to an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes a base station function herein may be a control center in an application scenario, such as the smart grid, the industrial control, the intelligent transportation, and the smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In a wireless communication system, the UE may hand over the serving cell. In the following description, a base station to which the current serving cell of the UE belongs may be referred to as a source base station, and a base station to which a serving cell that the UE is to be handed over belongs may be referred to as a target base station. In a design, the source base station or an AI device may perform artificial intelligence (artificial intelligence, AI) inference, determine an AI target cell, and send a handover request to a base station that corresponds to the AI target cell and that is referred to as the target base station. Then, if the target base station agrees with the handover request of the source base station, the UE may be handed over to the AI target cell. In embodiments of this application, considering that an AI inference result of the source base station or the AI device needs to consume a large amount of computing resources and memory resources of the source base station, the AI inference result may be sent in the handover request to the target base station corresponding to the AI target cell. Subsequently, the base station corresponding to the AI target cell may perform a series of operations based on the AI inference result. This improves utilization of the AI inference result.

Embodiments of this application relate to a process of predicting, by using an AI technology, the serving cell to which the UE can be handed over. Therefore, for ease of understanding, the AI technology is first described. It may be understood that this description is not intended as a limitation on embodiments of this application.

AI is a technology that performs complex calculation by simulating the human brain. With the improvement of data storage and capabilities, the AI is increasingly applied. Release 17 (Release 17, R17) of a 3rd generation partnership project (3rd generation partnership project, 3GPP) has passed a study item (study item, SI) and proposed application of the AI to new radio (new radio, NR). FIG. 2a is an example diagram of a first application framework of the AI in the NR.

A data source (data source) is configured to store training data and inference data. A model training host (model training host) analyzes or trains the training data (training data) provided by the data source to obtain an AI model, and deploys the AI model in a model inference host (model inference host). The model inference host uses the AI model to perform inference based on the inference data provided by the data source, to obtain an inference result. The inference result is used to provide proper AI-based prediction on network running, or guide a network to perform policy configuration or policy adjustment. The related policy configuration or policy adjustment is collectively planned by an actor (actor) entity, and sent to a plurality of objects of action (for example, a network entity) for execution. At the same time, after a related policy is applied, specific performance of a network can be input to the data source for storage.

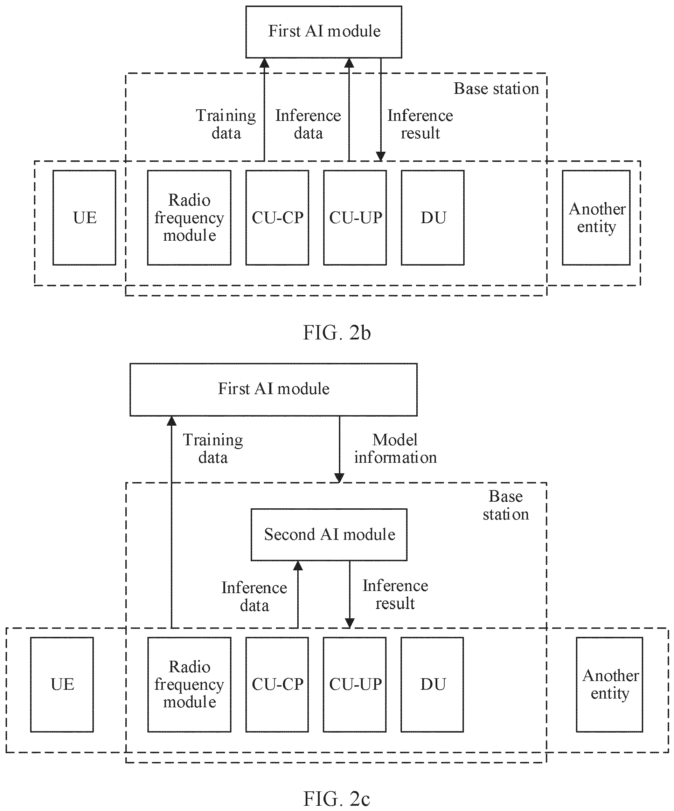

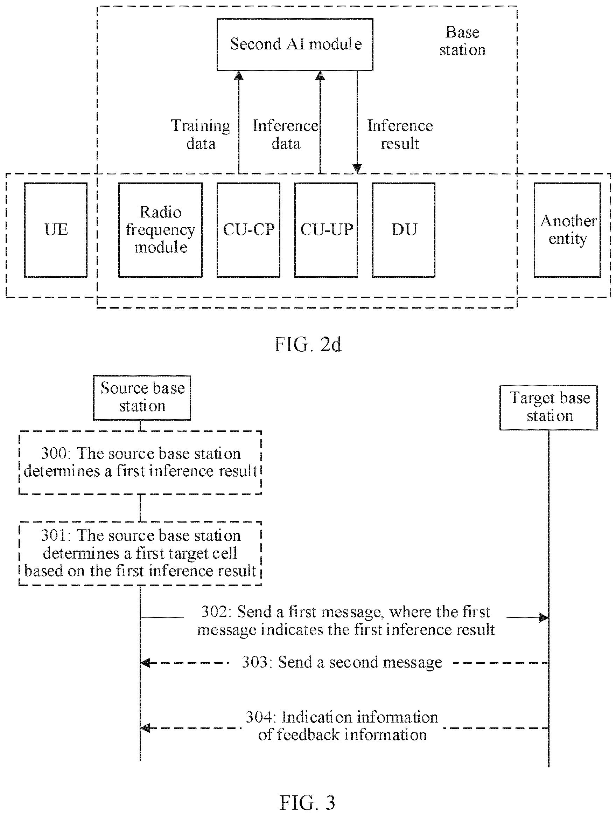

FIG. 2b, FIG. 2c, or FIG. 2d is an example diagram of a second application framework of the AI in the NR.

A first AI module independent of a base station receives training data. The first AI module analyzes or trains the training data to obtain an AI model. For a specific parameter, the first AI module may perform inference based on a corresponding AI model and inference data, to obtain the parameter. Refer to FIG. 2b. Alternatively, the first AI module may send information about the AI model to a second AI module located in the base station (or described as located in a RAN), and the second AI module performs inference based on the corresponding AI model and inference data, to obtain the parameter. Refer to FIG. 2c. Alternatively, an AI model used by the second AI module for inference may be obtained by the second AI module by receiving training data and training the training data. Refer to FIG. 2d.

It should be noted that in the frameworks in FIG. 2a to FIG. 2d, the AI model may be referred to as a model for short, and may be considered as a mapping from an input measurement quantity (measurement information) to an output parameter. The input measurement quantity may be one or more measurement quantities, and the output parameter may be one or more parameters. The training data may include a known input measurement quantity, or include a known input measurement quantity and a corresponding output parameter, and is used to train the AI model. The training data may be data from the base station, a CU, a CU-CP, a CU-UP, a DU, a radio frequency module, the UE, and/or another entity, and/or data obtained through inference by using the AI technology. This is not limited. The inference data includes an input measurement quantity, and is used to infer a parameter based on the model. The inference data may be data from the base station, the CU, the CU-CP, the CU-UP, the DU, the radio frequency module, the UE, and/or another entity. An inferred parameter may be considered as policy information and sent to an object of action. The inferred parameter may be sent to the base station, the CU, the CU-CP, the CU-UP, the DU, the radio frequency module, the UE, or the like, to perform the policy configuration or policy adjustment. AI models used to infer different parameters may be the same or different. This is not limited.

It may be understood that in embodiments of this application, the UE and/or the base station may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

As shown in FIG. 3, a process of a communication method is provided in this embodiment of this application, and includes at least the following steps.

Step 300: A source base station determines a first inference result. The first inference result is also referred to as an AI inference result, a first AI inference result, or another name. This is not limited.

In a design, an AI model is deployed in the source base station. For the AI model, refer to descriptions in FIG. 2a, FIG. 2c, or FIG. 2d. The source base station may perform AI inference based on the AI model, to obtain the first inference result. For example, the source base station may use at least one of the following as an input of the AI model, for example, historical track information of UE, historical camping information of the UE, a current movement direction of the UE, a speed of the UE, information about a network to which the UE subscribes (for example, China Telecom, China Unicom, or China Mobile), or a service requirement of the UE, to input into the AI model. An output of an AI model is the first inference result.

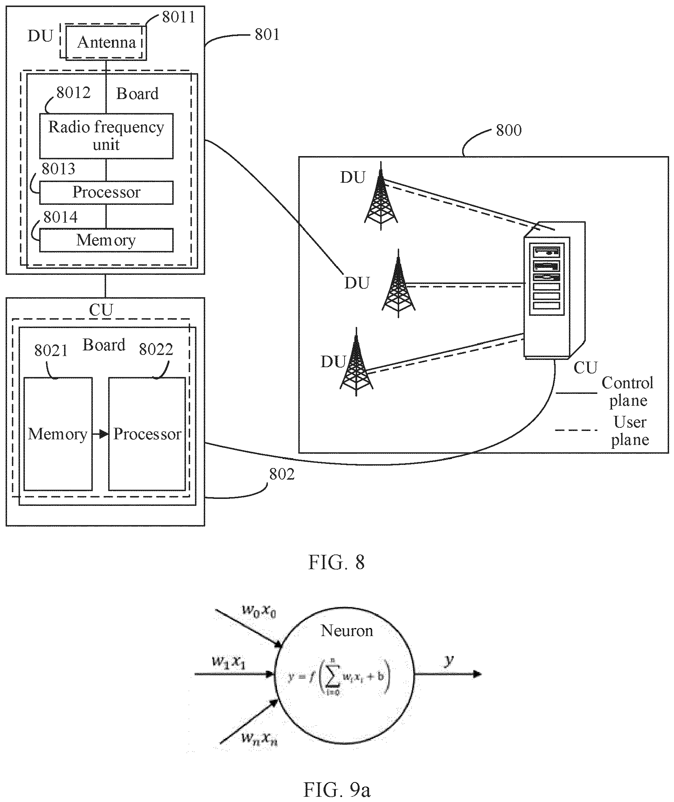

Alternatively, in another design, an AI device is independently deployed. The AI device may be referred to as remote intelligent communication, a wireless intelligent controller, an AI node, or the like. This is not limited. An AI model is deployed in the AI device. For the AI model, refer to descriptions in FIG. 2a or FIG. 2b. The AI device may perform AI inference based on the AI model, determine the first inference result, and send indication information of the first inference result to the source base station. It should be noted that the AI model in this application may include various deep neural networks. The neural network is a specific implementation form of machine learning. The neural network can be used to perform a classification task and a prediction task, and can also be used to establish conditional probability distribution between variables. Common neural networks include a deep neural network (deep neural network, DNN), a generative neural network (generative neural network, GNN), and the like. Based on a network construction manner, the DNN may include a feedforward neural network (feedforward neural network, FNN), a convolutional neural network (convolutional neural network, CNN), a recurrent neural network (recurrent neural network, RNN), and the like. The GNN includes a generative adversarial network (Generative Adversarial Network, GAN) and a variational autoencoder (Variational Autoencoder, VAE). The neural network is constructed based on a neuron. The following uses the DNN as an example to describe a calculation and optimization mechanism of the neural network. It may be understood that a specific implementation of the neural network is not limited in this embodiment of the present invention. In a DNN network, each neuron performs a weighted summation operation on an input value of the neuron, and outputs a weighted summation result according to an activation function. As shown in FIG. 9a, FIG. 9a is a schematic diagram of a structure of a neuron. It is assumed that an input of the neuron is $x = [x_0, x_1, ... x_n]$, a weight corresponding to the input is $w = [w_0, w_1, ... w_n]$, an offset of weighted summation is b, and forms of an activation function may be diversified. For example, the activation function is: $y = f(x) = max\{0, x\}$, and an output of execution of the neuron is:

$$y = f(\textstyle\sum_{i=0}^{n} w_i x_i + b) = max\{0, \textstyle\sum_{i=0}^{n} w_i x_i + b\}$$

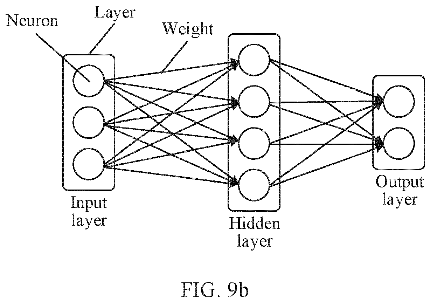

. $w_i x_i$ represents a product of $w_i$ and $x_i$. The DNN is generally of a multi-layer structure. Each layer of the DNN may include a plurality of neurons. The input layer processes a received value by using the neuron, and then transfers the value to an intermediate hidden layer. Similarly, the hidden layer transfers a calculation result to a final output layer, to generate a final output of the DNN. FIG. 9b is a schematic diagram of a layer relationship of a neural network. The DNN generally includes one or more hidden layers, and the hidden layer usually directly affects capabilities of extracting information and function fitting. Increasing a quantity of hidden layers of the DNN or increasing a quantity of neurons at each layer can improve the function fitting capability of the DNN. Parameters of each neuron include a weight, an offset, and an activation function. A set including parameters of all neurons in the DNN is referred to as a DNN parameter (or referred to as a neural network parameter). The weight and the offset of the neuron may be optimized in a training process, so that the DNN has capabilities of extracting a data feature and expressing a mapping relationship.

Thanks to advantages of the neural network in modeling and information feature extraction, a neural network-based communication solution can be designed. To support different application scenarios and obtain good results, the neural network parameter needs to be set and optimized. The neural network parameter includes neural network-related information, for example, may include one or more of the following:

a type of the neural network, for example, the deep neural network or the generative neural network;
neural network structure-related information, for example, the type of the neural network, a quantity of layers of the neural network, and a quantity of neurons; and
the parameters of each neuron in the neural network, such as the weight, the offset, and the activation function.

For example, the first inference result includes at least one of the following: future movement information of the UE, future service information of the UE, movement track prediction information of the UE, or the like. The movement track prediction information of the UE may refer to predicted geographical location information of the UE in future time. For example, the movement track prediction information of the UE may be predicted location information A of the UE in first time in the future, location information B of the UE in second time in the future, or the like.

In a design, the DNN network is used as an example. An input of a neuron is $x = [x_0, x_1, ... x_n]$, $n$ is an integer, and $x_0, x_1, ... , x_n$ may respectively correspond to one or more of the following: the historical track information of the UE, the historical camping information of the UE, the current movement direction of the UE, the speed of the UE, the information about the network to which the UE subscribes (for example, China Telecom, China Unicom, or China Mobile), the service requirement of the UE, or the like. The predicted future movement information and/or future service information of the UE are/is obtained through calculation shown in FIG. 9a and FIG. 9b.

For example, the future movement information of the UE may include at least one of the following predicted information:

- Information about a future cell of the UE. The information about the future cell of the UE may be information about a cell that the UE may access in future time. For example, information about future cells of the UE may include a cell 1 to a cell 10. Information about each cell may include at least one of a cell global identifier (cell global identifier, CGI), a physical cell identifier (physical cell identifier, PCI), a frequency channel number, a cell identifier (cell identifier, cell ID), a non-public network identifier (non-public network identifier, NPN ID), a non-terrestrial network identifier (non-terrestrial network identifier, NTN ID), or another cell identifier of the cell. The CGI may include a public land mobile network identifier (public land mobile network identifier, PLMN ID) and a cell ID. Optionally, the information about the cell may further include a tracking area code (tracking area code, TAC) and/or identification information of a network device to which the cell belongs, for example, a global network device identifier.
- Camping time information of the UE in the future cell. The camping time information may refer to time in which the UE receives a service in a specific cell, or referred to as time in which a specific cell is used as a serving cell, or the like. For a specific future cell, the camping time is specifically a start time point and an end time point at which the UE receives the service in the cell. The start time point may be referred to as start timestamp time, the end time point may be referred to as end timestamp time, and the like. Alternatively, the camping time may be duration in which the UE receives the service in the cell, and the duration may be referred to as a time range or the like. Optionally, the information about the future cells may be sequenced based on the camping time of the UE in different future cells. A manner in which the UE camps on the cell may be: The UE is handed over to the cell, a cell of the UE selects to access the cell, the UE reselects the cell, the UE reestablishes a connection to the cell, or the like.

- A manner of accessing the future cell by the UE. Optionally, the manner of accessing the future cell by the UE may include a legacy handover or ordinary handover (legacy handover or ordinary handover), a dual active protocol stack handover (dual active protocol stack handover, DAPS HO), a conditional handover (conditional handover, CHO), a random access channel-less handover (RACH-less HO), or another access manner.

- Information about whether the UE exits a connected state in the future cell. The information may be specifically the predicted information about whether the UE exits the connected state in the future cell. For example, if it is predicted that the UE exits the connected state in the future cell, a first value (such as 1) may be used for representation. If it is predicted that the UE does not exit the connected state in the future cell, a second value (such as 0) may be used for representation. For another example, if it is predicted that the UE exits the connected state in the future cell and enters an inactive state, a first value (such as 00) may be used for representation. If it is predicted that the UE exits the connected state in the future cell and enters an idle state, a second value (such as 01) may be used for representation. If it is predicted that the UE does not exit the connected state in the future cell, a third value (such as 11) may be used for representation.

- Prediction accuracy of future mobility of the UE. The foregoing information such as the information about the future cell of the UE, the camping time information of the UE in the future cell, the manner of accessing the future cell by the UE, and the information about whether the UE exits the connected state in the future cell may be referred to as the future movement information of the UE. Accuracy may be predicted for each piece of information in the future movement information of the UE. Alternatively, cell-level accuracy may be comprehensively predicted for all information in the future movement information of the UE. For example, all future cells include the cell 1 to the cell 10. Prediction accuracy of each cell may be comprehensively obtained based on future movement information of the cell. For example, comprehensive prediction accuracy of the cell 1 is 95%, and comprehensive prediction accuracy of the cell 2 is 98%.

For example, the future service information of the UE includes at least one of the following: a future service type of the UE, a quality of service (quality of service, QoS) requirement of a future service of the UE, a traffic volume of the future service, time information of the future service, or the like.

In a method for training the AI model, training of a DNN model is used as an example. It is assumed that there is actual historical input information $X_{his}(0, N)$ of the UE at a moment $[T_0, ..., T_x, T_{x+1}, ..., T_N]$, and the information includes one or more of the following: track information, camping information, a movement direction, a speed, information about a subscribed network (for example, China Telecom, China Unicom, or China Mobile), the service requirement of the UE, or the like, and there is actual output information $Y_{his}$ corresponding to a historical input of the UE, for example, information about a cell that is actually accessed or camped on, and a manner of accessing the cell. In a training process, historical input information $X_{his}(0, x + 1)$ of $[T_0, ..., T_x]$ may be selected as an input of the DNN model to obtain inference information $Y_{inf}(x + 1)$ of $[T_{x+1}]$. A loss function L(x + 1) is obtained by comparing $Y_{inf}(x + 1)$ with $Y_{his}(x + 1)$. A method for calculating the loss function may be, for example, a commonly used mean squared error loss and KL divergence (Kullback-Leibler divergence) error loss. This is not limited in this solution. The mean squared error loss is used as an example. For $$L(x + 1) = \frac{1}{p}\sum_{i=1}^{p}\{Y_{his}^i(x + 1) - \widehat{Y}_{inf}^i(x + 1)\}^2$$, $p$ represents a quantity of parameters in $Y_{his}^i$, that is, a quantity of items of the actual output information corresponding to the historical input, $Y_{his}^i(x + 1)$ represents a value of a parameter $i$ at a moment $(x + 1)$, and $\widehat{Y}_{inf}^i(x + 1)$ represents an inference value of the parameter $i$ at the moment $(x + 1)$. Current inference accuracy may be determined by comparing a calculation result of the loss function with a preset threshold. The specific preset threshold may be set based on a system requirement. For example, when a loss function value corresponding to an inference result at a specific moment is greater than a preset threshold 5, it is considered that a parameter of the model further needs to be adjusted, to reduce the loss function value. For example, if L(x + 1) = 6, the parameters of the model, for example, $w = [w_0, w_1, ... w_n]$, and the offset b of the weighted summation that are mentioned above, are adjusted, so that the loss function value at the moment $(x + 1)$ is reduced to below 5. When the model is adjusted to enable the loss function value at each moment to be lower than a target loss function value, that is, the foregoing preset threshold, it may be considered that based on the historical input at $[T_0 ... T_x, T_{x+1} ... T_N]$, the actual output corresponding to the historical input, and an inference result of the historical input, the model has converged through training and is available, that is, can be used for prediction.

Step 301: The source base station determines a first target cell based on the first inference result. The first target cell may also be referred to as an AI target cell. Alternatively, a first target cell is determined based on the first inference result. The first target cell is a predicted serving cell that can be accessed by the UE.

In a possible implementation, the source base station may select a cell from the information about the future cells in the first inference result as the first target cell. For example, the information about the future cells in the first inference result includes the cell 1 to the cell 10. The source base station may select the cell 1 as the first target cell. A specific condition based on which the source base station selects the cell 1 is not limited. For example, the source base station may consider mobility track information of the UE, and that the UE appears in a service range of the cell 1 in future time; or the source base station determines, based on the camping time information of the UE in the future cell, that the camping time of the UE in the cell 1 is the longest or relatively long, and selects the cell 1 as the first target cell.

Step 302: The source base station sends a first message to a target base station corresponding to the first target cell. The first message indicates the first inference result. The first message may be a handover request message or another message. This is not limited.

In a design, the source base station may indicate all or some information about the first inference result in the first message. In other words, the source base station may notify the target base station of all or some information of the first inference result. For example, the information about the future cells in the first inference result includes the cell 1 to the cell 10, and the source base station selects the cell 1 as the first target cell. The source base station may notify the target base station of information about the cell 2 to the cell 10 in the first inference result.

Step 303: The source base station receives a second message from the target base station. The second message indicates whether the target base station agrees with a handover request of the source base station. The second message may be referred to as a handover response message or another message.

For example, if the target base station agrees with the handover request of the source base station, that is, agrees with the UE to hand over to the first target cell, the second message may be a positive acknowledgment message, for example, a handover request acknowledgment (handover request acknowledgment) message. Alternatively, if the first target cell does not agree with the handover request of the source base station, that is, does not agree with the UE to hand over to the first target cell, the second message may be a negative acknowledgment message, for example, a handover preparation failure (handover preparation failure) message or a handover failure (handover failure) message.

In a design, if the target base station agrees with the handover request of the source base station, the target base station may allocate a resource of the first target cell to the UE in response to the first message, and send, to the source base station, indication information of the resource that is of the first target cell and that is allocated to the UE. Optionally, the indication information of the resource of the first target cell may be carried in the second message. The source base station may indicate the resource that is of the first target cell and that is allocated to the UE to the UE. The UE may access the first target cell. For example, after the UE accesses the first target cell, the target base station corresponding to the first target cell may use actual information after the UE accesses the target base station. When a difference between the actual information and the prediction information in the first inference result meets a preset condition, feedback information may be sent to the source base station, or the feedback information may be sent to the source base station based on another condition. This is not limited. For a specific trigger condition for sending the feedback information, refer to descriptions in step 304. In this way, the source base station, the AI device, or the like is enabled to optimize or update the AI model for determining the first inference result, to make inference of the AI model more accurate.

Step 304: The target base station sends indication information of the feedback information to the source base station or the AI device.

In a design, if the AI model is deployed in the source base station, the target base station sends the indication information of the feedback information to the source base station, and the source base station updates a parameter of the AI model based on the feedback information. Alternatively, if the AI device is independently deployed, the target base station may send the indication information of the feedback information to the source base station, and the source base station sends all or some of the feedback information to the AI device. Alternatively, the target base station may directly send the feedback information to the AI device through an interface between the target base station and the AI device. It should be noted that in a solution in which a first target device directly sends the feedback information to the AI device, the first message in step 302 may carry AI device-related information, for example, address information of the AI device or identification information of the AI device. The AI device optimizes or adjusts the parameter of the AI model based on the feedback information. The feedback information is used to optimize or update a parameter of a model for determining the first inference result. For example, an input parameter of the AI model may be updated or optimized and/or the AI model may be optimized or updated based on the feedback information. This is not limited.

For example, the target base station may send the feedback information to the source base station or the AI device when at least one of the following trigger conditions is met:

- The target base station determines that the UE is handed over to a second target cell. For example, due to factors such as movement of the UE, the first target base station considers that the UE needs to be handed over from the first target cell to the second target cell. A manner in which the target base station determines the second target cell may be: The first target cell performs AI inference based on the AI model, to determine a second inference result. Alternatively, the AI device performs AI inference based on the AI model, to determine a second inference result, and sends indication information of the second inference result to the first target cell. The first target cell determines the second target cell and the like based on the second inference result. For example, the first target cell is the cell 1, and the second target cell is the cell 2. When a base station corresponding to the cell 1 determines that the UE needs to be handed over to the cell 2, the base station corresponding to the cell 1 considers that the trigger condition is met, and the base station corresponding to the cell 1 may send the feedback information to the source base station.

- Service information of the UE in the first target cell changes. For example, the target base station may compare the service information of the UE in the first target cell with service information predicted in the first inference result. When a difference between the service information of the UE in the first target cell and the service information predicted in the first inference result exceeds a specific range, it may be considered that the trigger condition is met, and the feedback information may be sent to the source base station.

- A difference between actual camping time of the UE in the first target cell and camping time that is of the UE in the first target cell and that is predicted in the first inference result exceeds a preset condition, or the like.

- The second target cell determined by the target base station is different from a cell predicted in the received first inference result. In other words, the second target cell does not belong to the cells included in the information about the future cells in the first inference result. For example, the information about the future cells in the first inference result includes the cell 1 to the cell 10, and a cell that is determined by the target base station and to which the UE is to be handed over next time is a cell 20, it may be considered that the trigger condition is met, and the feedback information may be sent to the source base station.

- A manner in which the UE accesses the second target cell and that is predicted by the target base station is different from an access manner predicted in the first inference result. For example, the target base station may determine the second inference result. For a manner of determining the second inference result, refer to the foregoing descriptions. The second target cell and the manner of accessing the second target cell may be determined based on the second inference result. For example, the access manner predicted in the first inference result may include A, B, C, and the like. However, the manner in which the UE accesses the second target cell and that is predicted by the target base station is F. In this case, it may be considered that the trigger condition is met, and the feedback information may be sent to the source base station.

- An actual track of the UE deviates from a movement track of the UE predicted in the first inference result. For example, the movement track of the UE predicted in the first inference result is that the UE is predicted to be at a location A at a first time point, and the UE is predicted to be at a location B at a second time point. However, at the first time point, the UE is actually at a location C. When a distance between the location A and the location C is greater than a preset condition, it may be considered that the trigger condition is met, and the feedback information may be sent.

For example, the feedback information sent by the target base station to the source base station or the AI device may include at least one of the following:

- Actual camping time information of the UE in the first target cell. That the first target cell is the cell 1 is used as an example. The information may be actual camping time information of the UE in the cell 1. Similarly, the actual camping time information may be an actual camping start time point and an actual camping end time point of the UE in the cell 1. Alternatively, the actual camping time information may be actual camping duration information of the UE in the cell 1, or the like.

- Information about whether the UE actually exits a connected state in the first target cell.

- An inference result determined by the target base station, which is also referred to as the second inference result in this embodiment. Optionally, the target base station may determine the second inference result based on the first inference result sent by the source base station. For example, the target base station may use the first inference result as an input of the AI model to input into the AI model. An output of the AI model is the second inference result. Alternatively, the target base station may send the first inference result to the AI device, and the AI device performs AI inference based on the first inference result, to determine the second inference result, and sends the second inference result to the target base station. For a type of information included in the second inference result, refer to descriptions of the first inference result.

- Information about the second target cell. Optionally, the target base station determines the second target cell based on the second inference result. For example, information about the future cells included in the second inference result is the cell 2 to the cell 10, and the second target cell determined by the target base station may be the cell 2.

- A service type of the UE in the second target cell.

- A manner of accessing the second target cell by the UE. The service type of the UE in the second target cell or the manner of accessing the second cell by the UE may be predicted by the target base station. For example, the target base station may perform prediction or inference based on the first inference result.
- Accuracy of at least part of the first inference result, and the like.

It should be noted that step 300, step 301, step 303, or step 304 in the process shown in FIG. 3 are all optional. In the descriptions of FIG. 3, in step 302, the source base station indicates the first inference result to the target base station. Functions of the first inference result are mainly described in two aspects:

In a first aspect, the first target device may directly perform AI inference based on the first inference result, to determine the second inference result, and determine the second target cell based on the second inference result. Because a large quantity of computing resources or storage resources are consumed when the source base station or the AI device infers the first inference result, utilization of the first inference result can be improved. In addition, the first target device directly performs the AI inference based on the first inference result rather than performing inference from the beginning. This reduces consumption of computing resources or storage resources of the first target device.

In a second aspect, the first target cell may determine a trigger condition of the feedback information based on the first inference result. When an actual performance parameter of the UE in the first target cell is different from various performance parameters predicted in the first inference result or exceeds a threshold, the feedback information may be sent to the source base station or the AI device. The parameter of the AI model is optimized or updated based on the feedback information, to improve accuracy of subsequent AI inference and improve system efficiency.

It should be noted that in this embodiment of this application, step 302 in which the source base station sends the first inference result to the target base station is mainly protected. How the target base station or another device uses the first inference result is not limited in this embodiment of this application. The foregoing process of using the first inference result is merely an example for description.

For ease of understanding, a dual connectivity technology of UE is first described. The UE maintains connections to two base stations at the same time and receives a service. This is referred to as a dual connectivity architecture. The dual connectivity architecture supported in an NR system is also referred to as multi-radio dual connectivity (multi-radio dual connectivity, MR-DC), including dual connectivity formed by an LTE base station and an NR base station, dual connectivity formed by two NR base stations, dual connectivity formed by two LTE base stations, or the like. It may be understood that the LTE base station includes an LTE base station connected to a 4G core network device, or an LTE base station connected to a 5G core network device. The NR base station includes an NR base station connected to a 4G core network device, or an NR base station connected to a 5G core network device.

In the dual connectivity architecture, the UE may maintain connections to two base stations, that is, a master node (master node, MN) and a secondary node (secondary node, SN). A cell group that is in the master node and that provides an air interface resource for the UE is called a master cell group (master cell group, MCG). The master cell group includes at least one cell. For example, the master cell group may include a primary cell (primary cell, PCell), and when carrier aggregation (carrier aggregation, CA) is configured, the master cell group may further include at least one secondary cell (secondary cell, SCell).

A cell group that is in the secondary node and that provides an air interface resource for the UE is called a secondary cell group (secondary cell group, SCG). The secondary cell group includes at least one cell. For example, the secondary cell group may include a primary secondary cell (primary secondary cell, PSCell), and when CA is configured, the secondary cell group may include at least one secondary cell.

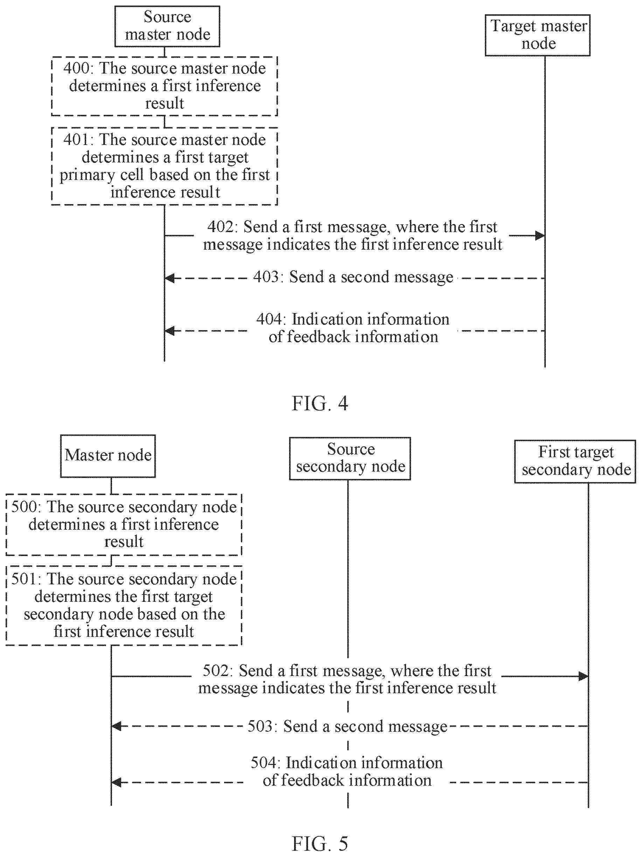

As shown in FIG. 4, a process of a communication method is provided. The process may be a specific application of the process shown in FIG. 3 in the dual connectivity architecture, and includes at least the following steps.

Step 400: A source master node determines a first inference result.

The first inference result may include a mobility-related inference result of a primary cell and/or a mobility-related inference result of an SN. The mobility-related inference result of the primary cell and the mobility-related inference result of the SN may be obtained through inference based on a same AI model, or may be obtained through inference based on different AI models. This is not limited. It should be noted that the mobility-related inference result of the primary cell and the mobility-related inference result of the SN may be obtained through inference by the source master node based on an AI model, or may be obtained through inference by an AI device based on the AI model. Alternatively, one of the foregoing two inference results is obtained through inference by the source master node, and the other is obtained through inference by an AI device. This is not limited.

The mobility-related inference result of the primary cell may include at least one of the following: movement information of a future primary cell/master node/master cell group of UE, future service information of the UE in the future primary cell/master node/master cell group, or movement track prediction information of the UE. The mobility-related inference result of the SN may include at least one of the following: movement information of a future primary secondary cell/secondary node/secondary cell group of the UE, future service information of the UE in the future primary secondary cell/secondary node/secondary cell group, or movement track prediction information of the UE. For detailed descriptions of information included in the mobility-related inference result of the primary cell/the mobility-related inference result of the SN, refer to related descriptions of the first inference result in step 300. Details are not described herein again.

Step 401: The source master node determines a first target primary cell based on the first inference result. The first target primary cell is a predicted primary cell that can be accessed by the UE.

For example, the source master node may determine the first target primary cell based on the mobility-related inference result of the primary cell in the first inference result. For example, future primary cells in mobility-related inference results of primary cells include a primary cell 1 to a primary cell 10. The source master node finds, through determining, that the primary cell 1 may be used as a primary cell of the UE, and the primary cell 1 may be considered as the first target primary cell.

Step 402: The source master node sends a first message to a base station corresponding to a first target cell. The base station corresponding to the first target primary cell may be referred to as a target master node. The first message is used to request to hand over the primary cell of the UE to the first target primary cell, and the first message may include indication information of the first inference result.

Different from the process shown in FIG. 3, the first message may include at least one of the mobility-related inference result of the primary cell and the mobility-related inference result of the SN. If the target base station agrees with the request of the first message, when receiving the mobility-related inference result of the primary cell, the target master node may configure primary cell-related information for the UE, for example, configure a master cell group for the UE. After the UE accesses the first target primary cell, the first target primary cell may add, change, or delete the secondary node for the UE based on the mobility-related inference result of the SN. Optionally, after changing or adding the secondary node for the UE, the target master node may further configure, based on the mobility-related inference result of the SN, added or updated secondary node-related information for the UE, for example, information about configuring a secondary cell group for the added or updated secondary node. Alternatively, after the UE accesses the target master node, the target master node may determine, based on the mobility-related inference result of the primary cell, a trigger condition of feedback information of the mobility-related inference result of the primary cell.

For example, when a difference between prediction information in primary cell-related inference result and actual information obtained after the UE accesses a first master node exceeds a preset value, the target master node may send the feedback information or the like to a source base station or the AI device, to optimize or update an AI model-related parameter. Similarly, the target master node may also determine, based on the mobility-related inference result of the SN, a trigger condition of feedback information of mobility-related inference result of the SN, and the like.

Optionally, when the first inference result includes the mobility-related inference result of the primary cell, the first message may include indication information indicating whether at least one of a source secondary node, a source secondary cell group, a source primary secondary cell, or a source secondary cell of a terminal device needs to be changed.

Step 403: The source master node receives a second message from the target master node. The second message may be a response message of the first message.

The second message may be a positive acknowledgment message, which indicates that the target master node agrees with the request of the source master node, so that the primary cell of the UE may be handed over to the first target primary cell. In a description, when the primary cell of the UE is handed over to the first target primary cell, it may be considered that a master node of the UE is handed over from the source master node to the target master node. When agreeing with the request of the UE, the target master node may determine master node-related configuration based on the mobility-related inference result of the primary cell, for example, determine master cell group-related configuration after the target master node is handed over as the master node. The master node-related configuration may be carried in the second message in step 403. When the UE is handed over to the target master node, the target master node may configure secondary node-related information for the UE based on the mobility-related inference result of the SN. Alternatively, the second message may be a negative acknowledgment message, which indicates that the target master node does not agree with the request of the source master node, so that the primary cell of the UE cannot be handed over to the first target primary cell.

Step 404: The target master node sends the feedback information to the source master node or the AI device. The feedback information is used to update or optimize the parameter of the AI model for determining the first inference result.

The feedback information may include the feedback information of the mobility-related inference result of the primary cell, and/or the feedback information of the mobility-related inference result of the SN. For content of the feedback information, refer to related descriptions in step 304. Details are not described herein again. Different from the foregoing, if the mobility-related inference result of the primary cell and the mobility-related inference result of the SN are obtained through inference based on different AI models, the mobility-related inference result of the primary cell is used to optimize or update a parameter of an AI model corresponding to the mobility-related inference result of the primary cell. The mobility-related inference result of the SN is used to optimize or update a parameter of an AI model corresponding to the mobility-related inference result of the SN. For the trigger condition of the feedback information sent by the target master node, refer to related descriptions in step 304. Details are not described herein again.

In this embodiment, the target master node sends the feedback information of the first inference result to the source master node or the AI device, and the source master node or the AI device may optimize or update, based on the feedback information, the parameter of the AI model for determining the first inference result. In this way, configuration for mobility that is obtained through inference and that is of the primary cell or the SN to which the UE is to be handed over is more accurate. Further, the target master node or the source master node may determine, based on the first inference result, whether to configure the SN for the UE, to configure a more suitable multi-connection configuration for the UE and improve a system efficiency.

As shown in FIG. 5, a process of a communication method is provided. The process is mainly used for an operation that is for adding or changing a secondary node for UE and that is triggered by a master node, and includes at least the following steps.

Step 500: The master node determines a first inference result.

The first inference result may include a mobility-related inference result of an SN. For specific descriptions of the mobility-related inference result of the SN, refer to step 400. Details are not described herein again.

Step 501: The master node determines a first target secondary node based on the first inference result.

For example, the master node may determine, based on the first inference result, whether the secondary node of the UE needs to be added or changed. For example, the master node determines, based on future track information of the UE in the mobility-related inference result of the SN, that a current secondary node cannot provide a service for the UE in future time, that quality of service of the current secondary node in future time cannot meet a requirement, or the like. The master node may determine the first target secondary node based on the mobility-related inference result of the SN. For example, the master node may determine the first target secondary node based on information such as a future primary secondary cell/secondary node/primary secondary cell group in the mobility-related inference result of the SN. For example, the master node finds that future cells 1 to 3 in the mobility-related inference result of the SN may be used as a secondary cell group of the UE in future time, and a base station corresponding to each of the cell 1 to the cell 3 may be referred to as the first target secondary node.

Step 502: The master node sends a first message to the first target secondary node. The first message may be a request message for requesting to add or change the first target secondary node as the secondary node of the UE, and the first message may include indication information of the first inference result.

In a design, when the first target secondary node agrees to be changed or added as the secondary node of the UE, the first target secondary node may determine, based on the first inference result, secondary node-related information configured for the SN, for example, secondary cell group information, primary secondary cell information, or secondary cell information. Alternatively, after the UE accesses the first target secondary node, the first target secondary node may perform AI inference based on the first inference result, to determine a future target secondary node that can be added or changed for the UE, or the like.

Step 503: The master node receives a second message from the first target secondary node.

The second message may be a positive acknowledgment message, which indicates that the first target secondary node agrees to be added or changed as the secondary node of the UE. Alternatively, the second message may be a negative acknowledgment message, and indicates that the first target secondary node does not agree to be added or changed as the secondary node of the UE. Optionally, if the first target secondary node agrees to be changed or added as the secondary node of the UE, the second message may include the secondary node-related information configured by the first target secondary node for the UE, for example, the secondary cell group information, the primary secondary cell information, or the secondary cell information. It should be noted that the first target secondary node may notify, through the second message, the master node of the secondary node-related information configured for the UE, and the master node forwards the secondary node-related information configured for the UE to the UE. Alternatively, when the UE establishes a connection to a target master node, the first target secondary node may directly notify the UE of the secondary node-related information configured for the UE. This is not limited.

Step 504: The first target secondary node sends feedback information to the master node or an AI device.

It should be noted that the first target secondary node may optimize or update, based on the feedback information, an AI model-related parameter used for inferring the mobility of the SN. Certainly, this is based on a premise that the master node obtains the mobility-related inference result of the SN through inference based on an AI model. Alternatively, if the mobility-related inference result of the SN is obtained through inference by the AI device based on the AI model, the first target secondary node may directly send the feedback information to the AI device, or may send the feedback information to the master node, and the master node forwards the feedback information to the AI device.

It should be noted that step 500, 501, 503, or 504 may be optional.

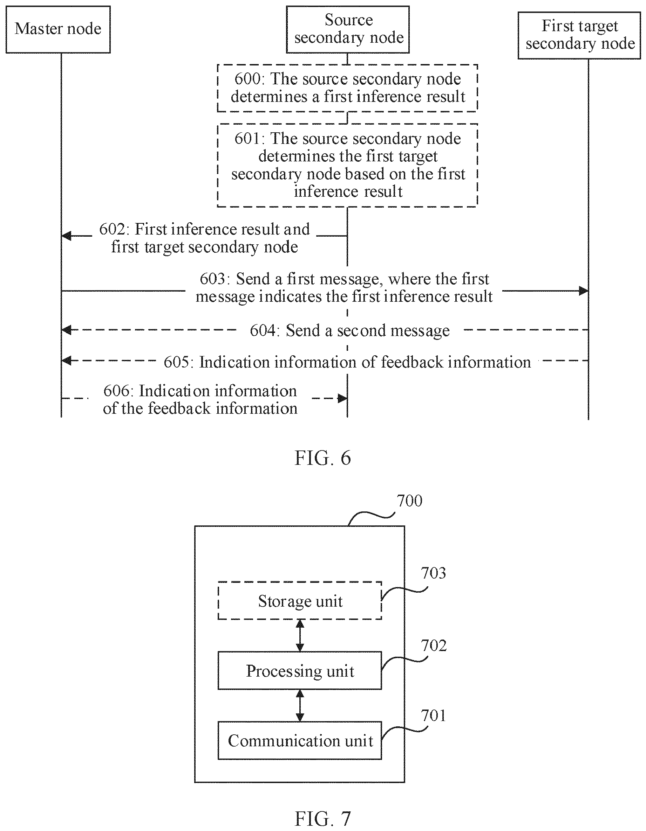

As shown in FIG. 6, a process of a communication method is provided. Different from the process shown in FIG. 5, in this method, a source secondary node obtains a first target secondary node based on a first inference result. Then, the source secondary node notifies a master node of the first inference result and the first target secondary node, and the master node triggers a process of adding or changing the first target secondary node. The process includes at least the following steps.

Step 600: The source secondary node determines the first inference result.

The first inference result may include a mobility-related inference result of an SN. For specific descriptions of the mobility-related inference result of the SN, refer to step 400. Details are not described herein again. It should be noted that the first inference result may be obtained by the source secondary node through inference based on an AI model, or may be obtained through inference by an AI device based on the AI model and then notified to the source secondary node.

Step 601: The source secondary node determines the first target secondary node based on the first inference result.

Step 602: The source secondary node sends indication information of the first inference result and the first target secondary node to the master node. Alternatively, the source secondary node may only send indication information of the first inference result to the master node. The master node determines the first target secondary node based on the first inference result. The indication information of the first target secondary node may be identification information of the first target secondary node, for example, a global node identifier.

Step 603: The master node sends a first message to the first target secondary node. The first message includes the indication information of the first inference result, and the first message is used to request to add or change the first target secondary node as a secondary node of the UE.

Step 604: The master node receives a second message from the first target secondary node. The second message may be a response message of the first message.

Step 605: The first target secondary node sends indication information of a feedback message to the master node.

Step 606: The master node sends the indication information of the feedback message to the source secondary node.

It should be noted that in step 605 and step 606, the first target secondary node may send the indication information of the feedback information to the master node, and the master node forwards the indication information to the source secondary node. The source secondary node optimizes or updates, based on the feedback information, an AI model for obtaining the mobility-related inference result of the SN through inference. Alternatively, the first target secondary node may directly send the indication information of the feedback information to the source secondary node. In this case, the first message in step 603 may need to carry address information, the identification information, or the like of the source secondary node. Alternatively, if the mobility-related inference result of the SN is obtained through inference by the AI device, the first target secondary node may directly send the indication information of the feedback information to the AI device, or the master node, the source secondary node, or the like may forward the indication information of the feedback information to the AI device. This is not limited.

It should be noted that in FIG. 6, all steps except step 603 are optional. In step 601, if a source base station determines to release the source base station based on the first inference result, the source secondary node may further send release indication information to the master node, and the master node forwards the release indication information of the source secondary node to UE. Optionally, after releasing the source secondary node, the master node may send indication information of a feedback message to the source secondary node, and the like.

In the embodiment in FIG. 5 or FIG. 6, a primary secondary cell-related or secondary node-related AI model result and exchange of corresponding performance feedback information in an SN adding or an SN changing scenario are introduced, so that a corresponding node can be further used to optimize an AI module and improve AI performance.

For the processes in FIG. 3 to FIG. 6, it should be noted that:

1. The foregoing focuses on the differences in FIG. 3 to FIG. 6. For other content than the differences, reference may be made to each other.
2. The steps in the processes described in FIG. 3 to FIG. 6 are not all steps that need to be performed, and some steps may be added or deleted based on actual requirements of the processes. For example, in the foregoing process in FIG. 3, steps 300, 301, 303, and 304 may be optionally performed.
3. In the foregoing descriptions of FIG. 3 to FIG. 6, an example in which a hardware device is used as a whole is used for description, and actions of modules in the hardware device are not described. To support the hardware as a whole in implementing related functions described in the foregoing embodiments, operations between the modules in the hardware device and operations of the modules also fall within the protection scope of embodiments of this application.

For example, in a design, with the introduction of an open radio access network (open radio access network, RAN, O-RAN), a function of an access network device may be implemented by a plurality of common standard modules. For example, a function of a base station may be implemented by a CU module or a DU module. For example, in the process in FIG. 3, an action of the source base station may be as follows: The source base station determines the first inference result, determines the first target cell based on the first inference result, sends the first message to the target base station. The first message includes indication information of the first inference result.

If the source base station includes the CU module and the DU module, a processing process shown in FIG. 3 may include: A CU determines the first inference result, determines the first target cell based on the first inference result, and sends the first inference result to a DU. The DU sends the first message to the target base station, and the first message includes indication information of the first inference result.

5. In the foregoing descriptions of FIG. 3 to FIG. 6, the description that "a message carries a specific piece of indication information" is used. For example, the first message carries the indication information of the first inference result. The foregoing description is described as follows: A message may directly indicate corresponding information, for example, directly carry the information in the message. Alternatively, the message may indirectly indicate the corresponding information. For example, a message A includes indication information of information X, and the data A may directly indicate the information X, for example, carry the information X in the data A. Alternatively, the data A may indirectly indicate the information X. For example, the data A may carry other information of the information X, and the like.

The foregoing describes in detail the methods in embodiments of this application with reference to FIG. 3 to FIG. 6. The following describes in detail apparatuses provided in embodiments of this application with reference to FIG. 7 and FIG. 8. It should be understood that descriptions in apparatus embodiments correspond to descriptions in method embodiments. Therefore, for content that is not described in detail, refer to the descriptions in the foregoing method embodiments.

FIG. 7 is a possible block diagram of an apparatus according to an embodiment of this application. As shown in FIG. 7, an apparatus 700 may include a communication unit 701 and a processing unit 702. The communication unit 701 is configured to support communication between the apparatus 700 and another device. Optionally, the communication unit 701 is also referred to as a transceiver unit, and may include a receiving unit and/or a sending unit that are respectively configured to perform a receiving operation and a sending operation. The processing unit 702 is configured to support the apparatus in performing processing. Optionally, the apparatus 700 may further include a storage unit 703 that is configured to store program code and/or data of the apparatus 700.

In a first embodiment, the apparatus 700 may be a network device or a module, a chip, or a circuit in the network device. The communication unit 701 is configured to perform receiving and sending operations of a source base station in the process shown in FIG. 3. The processing unit 702 is configured to perform a processing operation of the source base station in the process shown in FIG. 3.

For example, the processing unit 702 is configured to generate a first message. The communication unit 701 is configured to send the first message to a first network device corresponding to a first target cell. The first target cell is a predicted serving cell that can be accessed by a terminal device. The first message indicates a first inference result, and the first inference result includes at least one of the following predicted information: future movement information of the terminal device, future service information of the terminal device, or future movement track information of the terminal device.

In a possible design, the first target cell is determined based on the first inference result.

In a possible design, the future movement information of the terminal device includes at least one of the following predicted information:

information about a future cell of the terminal device, camping time information of the terminal device in the future cell, a manner of accessing the future cell by the terminal device, information about whether the terminal device exits a connected state in the future cell, or prediction accuracy of the future movement information of the terminal device.

In a possible design, the future service information of the terminal device includes at least one of the following predicted information: a future service type of the terminal device, a quality of service QoS requirement of a future service, a traffic volume of the future service, or time information of the future service.

In a possible design, the communication unit 701 is further configured to receive feedback information from the first network device. The feedback information includes indication information of at least one of the following: actual camping time information of the terminal device in the first target cell, information about whether the terminal device actually exits the connected state in the first target cell, a second inference result, or a second target cell.

In a possible design, the feedback information is used to optimize or update a parameter of a model for determining the first inference result.

In a possible design, the first inference result includes a mobility-related inference result of a primary cell of the terminal device, and/or a mobility-related inference result of a secondary node of the terminal device.

In a possible design, when the first inference result includes the mobility-related inference result of the primary cell of the terminal device, the first message includes indication information indicating whether at least one of a source secondary node, a source secondary cell group, a source primary secondary cell, or a source secondary cell of the terminal device needs to be changed.

In a second embodiment, the apparatus 700 may be a network device or a module, a chip, or a circuit in the network device. The communication unit 701 is configured to perform receiving and sending operations of a target base station in the process shown in FIG. 3. The processing unit 702 is configured to perform a processing operation of the target base station in the process shown in FIG. 3.

For example, the communication unit 701 is configured to receive a first message from a second network device. The first message indicates a first inference result, and the first inference result includes at least one of the following predicted information: future movement information of a terminal device, future service information of the terminal device, or future movement track information of the terminal device. The processing unit 702 is configured to process the first message.

In a possible design, the first message is used to request the first network device to allocate a resource corresponding to a first target cell to the terminal device, and the first target cell is a predicted serving cell that can be accessed by the terminal device.

In a possible design, the processing unit 702 is further configured to allocate the resource of the first target cell to the terminal device in response to the first message. The communication unit 701 is further configured to send, to the second network device, indication information of the resource that is of the first target cell and that is allocated to the terminal device.

In a possible design, the future movement information of the terminal device includes at least one of the following predicted information: information about a future cell of the terminal device, camping time information of the terminal device in the future cell, a manner of accessing the future cell by the terminal device, information about whether the terminal device exits a connected state in the future cell, or prediction accuracy of the future movement information of the terminal device.

In a possible design, the future service information of the terminal device includes at least one of the following predicted information: a future service type of the terminal device, a quality of service QoS requirement of a future service, a traffic volume of the future service, or time information of the future service.

In a possible design, the communication unit 701 is further configured to send feedback information to the second network device. The feedback information includes indication information of at least one of the following: actual camping time information of the terminal device in the first target cell, information about whether the terminal device actually exits the connected state in the first target cell, a second inference result, or a second target cell.

In a possible design, the feedback information is used to optimize or update a parameter of a model for determining the first inference result.

In a possible design, the first inference result includes a mobility-related inference result of a primary cell of the terminal device, and/or a mobility-related inference result of a secondary node of the terminal device.

In a possible design, when the first inference result includes the mobility-related inference result of the primary cell of the terminal device, the first message includes indication information indicating whether at least one of a source secondary node, a source secondary cell group, a source primary secondary cell, or a source secondary cell of the terminal device needs to be changed.

It should be understood that division of units in the foregoing apparatus is merely logical function division, and in actual implementation, all or some of the units may be integrated into one physical entity, or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 8 is a schematic diagram of a structure of a network device according to an embodiment of this application. The network device may be an access network device (for example, a source base station or a target base station). An access network device 800 may include one or more DUs 801 and one or more CUs 802. The DU 801 may include at least one antenna 8011, at least one radio frequency unit 8012, at least one processor 8013, and at least one memory 8014. The DU 801 is mainly configured to receive and send a radio frequency signal, perform conversion between the radio frequency signal and a baseband signal, and perform partial baseband processing. The CU 802 may include at least one processor 8022 and at least one memory 8021.

The CU 802 is mainly configured to perform baseband processing, control an access network device, and the like. The DU 801 and the CU 802 may be physically disposed together, or may be physically disposed separately, that is, a distributed base station. The CU 802 is a control center of an access network device, may also be referred to as a processing unit, and is mainly configured to complete a baseband processing function. For example, the CU 802 may be configured to control the access network device to perform an operation process related to the access network device in the foregoing method embodiments.

In addition, optionally, the access network device 800 may include one or more radio frequency units, one or more DUs, and one or more CUs. The DU may include at least one processor 8013 and at least one memory 8014, the radio frequency unit may include at least one antenna 8011 and at least one radio frequency unit 8012, and the CU may include at least one processor 8022 and at least one memory 8021.

In an example, the CU 802 may include one or more boards. A plurality of boards may jointly support a wireless access network (for example, a 5G network) with a single access indication, or may respectively support wireless access networks (for example, an LTE network, a 5G network, or another network) of different access standards. The memory 8021 and the processor 8022 may serve the one or more boards. In other words, a memory and a processor may be disposed on each board. Alternatively, a plurality of boards may share a same memory and a same processor. In addition, a necessary circuit may further be disposed on each board. The DU 801 may include one or more boards. A plurality of boards may jointly support a wireless access network (for example, a 5G network) with a single access indication, or may respectively support wireless access networks (for example, an LTE network, a 5G network, or another network) of different access standards. The memory 8014 and the processor 8013 may serve one or more boards. In other words, a memory and a processor may be disposed on each board. Alternatively, a plurality of boards may share a same memory and a same processor. In addition, a necessary circuit may further be disposed on each board.

The access network device shown in FIG. 8 can implement processes related to the source base station and the target base station in the foregoing method embodiments. Operations and/or functions of the modules in the access network device shown in FIG. 8 are respectively used to implement corresponding processes in FIG. 3 to FIG. 6 in the foregoing method embodiments. For details, refer to descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, in A, B, or C contains at least one of A, B, C, AB, AC, BC, or ABC. In addition, unless otherwise specified, ordinal numerals such as "first" and "second" in embodiments of this application are used to distinguish between a plurality of objects, and are not used to limit the sequence, timing, priority, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, comprising:
   sending a first message to a first network device corresponding to a first target cell, wherein the first target cell is a predicted serving cell that can be accessed by a terminal device, the first message indicates a first inference result, and the first inference result comprises at least one of the following predicted information:
   future movement information of the terminal device, future service information of the terminal device, or future movement track information of the terminal device.

2. The method according to claim 1, wherein the first target cell is determined based on the first inference result.

3. The method according to claim 1 or 2, wherein the future movement information of the terminal device comprises at least one of the following predicted information:
   information about a future cell of the terminal device, camping time information of the terminal device in the future cell, a manner of accessing the future cell by the terminal device, information about whether the terminal device exits a connected state in the future cell, or prediction accuracy of the future movement information of the terminal device.

4. The method according to any one of claims 1 to 3, wherein the future service information of the terminal device comprises at least one of the following predicted information:
   a future service type of the terminal device, a quality of service QoS requirement of a future service, a traffic volume of the future service, or time information of the future service.

5. The method according to any one of claims 1 to 4, further comprising:
   receiving feedback information from the first network device, wherein the feedback information comprises indication information of at least one of the following:
   actual camping time information of the terminal device in the first target cell, information about whether the terminal device actually exits the connected state in the first target cell, a second inference result, or a second target cell.

6. The method according to claim 5, wherein the feedback information is used to optimize or update a parameter of a model for determining the first inference result.

7. The method according to any one of claims 1 to 6, wherein the first inference result comprises a mobility-related inference result of a primary cell of the terminal device, and/or a mobility-related inference result of a secondary node of the terminal device.

8. The method according to claim 7, wherein when the first inference result comprises the mobility-related inference result of the primary cell of the terminal device, the first message comprises indication information indicating whether at least one of a source secondary node, a source secondary cell group, a source primary secondary cell, or a source secondary cell of the terminal device needs to be changed.

9. A communication method, comprising:
   receiving a first message from a second network device, wherein the first message indicates a first inference result, and the first inference result comprises at least one of the following predicted information:
   future movement information of a terminal device, future service information of the terminal device, or future movement track information of the terminal device.

10. The method according to claim 9, wherein the first message is used to request a first network device to allocate a resource corresponding to a first target cell to the terminal device, and the first target cell is a predicted serving cell that can be accessed by the terminal device.

11. The method according to claim 10, further comprising:

    allocating the resource of the first target cell to the terminal device in response to the first message; and
    sending, to the second network device, indication information of the resource that is of the first target cell and that is allocated to the terminal device.

12. The method according to any one of claims 9 to 11, wherein the future movement information of the terminal device comprises at least one of the following predicted information:
    information about a future cell of the terminal device, camping time information of the terminal device in the future cell, a manner of accessing the future cell by the terminal device, information about whether the terminal device exits a connected state in the future cell, or prediction accuracy of the future movement information of the terminal device.

13. The method according to any one of claims 9 to 12, wherein the future service information of the terminal device comprises at least one of the following predicted information:
    a future service type of the terminal device, a quality of service QoS requirement of a future service, a traffic volume of the future service, or time information of the future service.

14. The method according to any one of claims 9 to 13, further comprising:
    sending feedback information to the second network device, wherein the feedback information comprises indication information of at least one of the following:
    actual camping time information of the terminal device in the first target cell, information about whether the terminal device actually exits a connected state in the first target cell, a second inference result, or a second target cell.

15. The method according to claim 14, wherein the feedback information is used to optimize or update a parameter of a model for determining the first inference result.

16. The method according to any one of claims 9 to 15, wherein the first inference result comprises a mobility-related inference result of a primary cell of the terminal device, and/or a mobility-related inference result of a secondary node of the terminal device.

17. The method according to claim 16, wherein when the first inference result comprises the mobility-related inference result of the primary cell of the terminal device, the first message comprises indication information indicating whether at least one of a source secondary node, a source secondary cell group, a source primary secondary cell, or a source secondary cell of the terminal device needs to be changed.

18. A communication apparatus, comprising a unit configured to implement the method according to any one of claims 1 to 17.

19. An apparatus, comprising a processor and a memory, wherein the processor is coupled to the memory, and the processor is configured to implement the method according to any one of claims 1 to 17.

20. A computer-readable storage medium, wherein the computer-readable storage medium stores instructions, and when the instructions are run on a computer, the computer is enabled to perform the method according to any one of claims 1 to 17.

21. A computer program product, comprising instructions, wherein when the instructions are run on a computer, the computer is enabled to perform the method according to any one of claims 1 to 17.

FIG. 1

FIG. 2a

First AI module

Base station

Training
data

Inference
data

Inference
result

| UE | Radio frequency module | CU-CP | CU-UP | DU | | Another entity |

FIG. 2b

First AI module

Training
data

Model
information

Base
station

Second AI module

Inference
data

Inference
result

| UE | Radio frequency module | CU-CP | CU-UP | DU | | Another entity |

FIG. 2c

Second AI module

Base station

Training data | Inference data | Inference result

UE | Radio frequency module | CU-CP | CU-UP | DU | Another entity

FIG. 2d

Source base station

Target base station

300: The source base station determines a first inference result

301: The source base station determines a first target cell based on the first inference result

302: Send a first message, where the first message indicates the first inference result

303: Send a second message

304: Indication information of feedback information

FIG. 3

```
┌──────────────┐                                    ┌──────────────┐
│    Source    │                                    │Target master │
│ master node  │                                    │     node     │
└──────┬───────┘                                    └──────┬───────┘
┌──────┴──────────────────┐                                │
│ 400: The source master  │                                │
│ node determines a first │                                │
│    inference result     │                                │
└──────┬──────────────────┘                                │
┌──────┴──────────────────┐                                │
│ 401: The source master  │                                │
│   node determines a     │                                │
│   first target primary  │                                │
│ cell based on the first │                                │
│    inference result     │                                │
└──────┬──────────────────┘                                │
       │  402: Send a first message, where the first       │
       │  message indicates the first inference result     │
       │──────────────────────────────────────────────────▶│
       │                                                   │
       │◀ ─ ─ ─ ─ 403: Send a second message ─ ─ ─ ─ ─ ─ ─│
       │                                                   │
       │           404: Indication information             │
       │◀ ─ ─ ─ ─      of feedback information    ─ ─ ─ ─ ─│
       │                                                   │
```

FIG. 4

```
┌──────────────┐         ┌──────────────┐         ┌──────────────┐
│ Master node  │         │    Source    │         │ First target │
│              │         │secondary node│         │secondary node│
└──────┬───────┘         └──────┬───────┘         └──────┬───────┘
┌──────┴──────────────────┐     │                        │
│ 500: The source         │     │                        │
│ secondary node          │     │                        │
│ determines a first      │     │                        │
│ inference result        │     │                        │
└──────┬──────────────────┘     │                        │
┌──────┴──────────────────┐     │                        │
│ 501: The source         │     │                        │
│ secondary node          │     │                        │
│ determines the first    │     │                        │
│ target secondary node   │     │                        │
│ based on the first      │     │                        │
│ inference result        │     │                        │
└──────┬──────────────────┘     │                        │
       │  502: Send a first message, where the first      │
       │  message indicates the first inference result    │
       │──────────────────────────────────────────────────▶│
       │                        │                          │
       │◀─ ─ ─ ─ ─ 503: Send a second message ─ ─ ─ ─ ─ ─ ─│
       │                        │                          │
       │           504: Indication information             │
       │◀─ ─ ─ ─ ─     of feedback information   ─ ─ ─ ─ ─ ─│
       │                        │                          │
```

FIG. 5

| Master node | | Source secondary node | | First target secondary node |

**600:** The source secondary node determines a first inference result

**601:** The source secondary node determines the first target secondary node based on the first inference result

**602:** First inference result and first target secondary node

**603:** Send a first message, where the first message indicates the first inference result

**604:** Send a second message

**605:** Indication information of feedback information

**606:** Indication information of the feedback information

FIG. 6

700

Storage unit — 703

Processing unit — 702

Communication unit — 701

FIG. 7

FIG. 8

FIG. 9a

FIG. 9b

## INTERNATIONAL SEARCH REPORT

International application No.

**PCT/CN2022/110695**

| A. | CLASSIFICATION OF SUBJECT MATTER |
| --- | --- |

H04W 36/00(2009.01)i; H04W 4/20(2018.01)i; H04W 8/08(2009.01)i; H04W 24/06(2009.01)i; H04W 28/08(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 切换, 目标, 小区, 移动, 轨迹, 未来, 反馈, 源, handover, target, cell, mobility, history, future, response, source

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | CN 108810965 A (HUAWEI TECHNOLOGIES CO., LTD.) 13 November 2018 (2018-11-13) description, paragraphs [0107]-[0272] | 1-21 |
| X | CN 101365242 A (TONGJI UNIVERSITY) 11 February 2009 (2009-02-11) description, page 1, the third-to-last paragraph to page 3, line 1 | 1-21 |
| A | CN 104902529 A (NUBIA TECHNOLOGY CO., LTD.) 09 September 2015 (2015-09-09) entire document | 1-21 |
| A | US 2004203831 A1 (INTEL CORP.) 14 October 2004 (2004-10-14) entire document | 1-21 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 September 2022** | **21 October 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/110695**

| Patent document cited in search report | | | Publication date (day/month/year) | Patent family member(s) | | | Publication date (day/month/year) |
|---|---|---|---|---|---|---|---|
| CN | 108810965 | A | 13 November 2018 | None | | | |
| CN | 101365242 | A | 11 February 2009 | None | | | |
| CN | 104902529 | A | 09 September 2015 | None | | | |
| US | 2004203831 | A1 | 14 October 2004 | US | 7092719 | B2 | 15 August 2006 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110900384